Europäisches Patentamt

European Patent Office

Office européen des brevets

(11) Publication number: **0 031 989**
**B1**

(19)

(12) # EUROPEAN PATENT SPECIFICATION

(45) Date of publication of patent specification: **23.05.84**

(21) Application number: **80302614.5**

(22) Date of filing: **31.07.80**

(51) Int. Cl.³: **G 01 V 1/40**

(54) Shear wave acoustic well logging tool.

(30) Priority: **20.12.79 US 106076**

(43) Date of publication of application:
**15.07.81 Bulletin 81/28**

(45) Publication of the grant of the patent:
**23.05.84 Bulletin 84/21**

(84) Designated Contracting States:
**DE FR GB NL**

(56) References cited:
**US-A-3 354 983**
**US-A-3 583 677**
**US-A-3 593 255**
**US-A-4 042 063**
**US-A-4 207 961**

(73) Proprietor: **MOBIL OIL CORPORATION**
**150 East 42nd Street**
**New York New York 10017 (US)**

(72) Inventor: **Angona, Frank Anthony**
**2650 Deephill Circle**
**Dallas Texas 75233 (US)**
Inventor: **Zemanek, Joseph Jr.**
**936 Timber Dell Lane**
**Dallas Texas 75232 (US)**

(74) Representative: **West, Alan Harry et al**
**Mobil Court 3 Clements Inn**
**London WC2A 2EB (GB)**

EP 0 031 989 B1

## Description

This invention relates to a shear wave acoustic well logging tool.

Wells may be surveyed by acoustic logging techniques. One acoustic logging technique involves the generation and reception of acoustic pulses and the determination of the travel time of the pulse between a transmitter and receiver or between spaced receivers. By this technique the velocity of sound through a subterranean formation may be determined in order to characterize the formation. Another acoustic logging technique involves amplitude logging in which the loss of amplitude of an acoustic signal as it travels between a transmitter and receiver, or between spaced receivers, is measured. Velocity and amplitude logging may be carried out separately or in combination, that is, the logging tool may be equipped with appropriate circuitry to detect both the travel time of the acoustic signal and the loss in amplitude.

An acoustic signal may be transmitted through a subterranean formation in both compressional and shear (transverse) modes. Because a shear wave cannot be transmitted along the borehole through liquid in the borehole, it has been proposed to transmit and receive shear waves by transducers positioned in contact with the borehole wall. For example, U.S. Patent No. 3,949,352 discloses a shear wave acoustic logging system employing transmitting and receiving transducers spaced in close proximity with one another and located within a transducer mounting pad which is pressed against the wall of the borehole.

While the procedure described in U.S. 3,949,352 requires a direct coupling of the transmitting and receiving transducers to the borehole wall, shear wave logging employing so-called "indirect" excitation of the borehole wall is disclosed in Kitsunezaki, "A new Method for Shear Wave Logging", OYO Technical Note, Urawa Research Institute, October 1978. In this procedure an electromagnetic transducer is "suspended" in water (the borehole fluid) and used to generate an asymmetric shear wave pulse through the borehole fluid into the formation. The transducer is oriented such that an excitation bobbin vibrates along an axis normal to the axis of the well. The resulting shear wave is detected at a number of receivers spaced longitudinally from the transmitter. The receiver takes the form of geophone type detectors in a detector body suspended in the borehole fluid and having an apparent density adjusted to be the same as the density of the borehole fluid.

U.S. Patent No. 3,593,255 discloses a further shear wave acoustic logging tool which includes an acoustic generator composed of two semi-cylindrical segments of piezoelectric material which are electrically driven so that when one segment expands in a radial direction, the other segment contracts in a radial direction. Reflected acoustic waves may be detected by a receiver of similar configuration.

We have now devised an acoustic well logging tool utilizing a bender-type transducer for the generation of acoustic shear waves within the subterranean formation under investigation. Transducers of this type are preferably employed also for the detection of reflected acoustic shear wave signals.

Accordingly, the invention resides in a shear wave acoustic logging tool for insertion into a borehole comprising an acoustic transmitter (17) which is mounted in a compartment in the tool containing a coupling liquid (35) and which is connected to means (22) for exciting the transmitter, and an acoustic receiver (19, 20) mounted in the tool and spaced longitudinally from the transmitter (17), characterized in that the acoustic transmitter (17) comprises a bender-type transducer (32) having opposed unrestricted planar surfaces exposed to the coupling liquid (35) said surfaces being oriented parallel to the longitudinal axis of the tool and being aligned with opposed unrestricted openings in the compartment, and the surfaces being capable of being simultaneously flexed in a conforming manner to generate a positive pressure wave in one direction while simultaneously generating a negative pressure wave in the opposite direction. Preferably, the receiver is also a bender-type transducer mounted in a liquid-filled compartment and having opposed unrestricted planar surfaces exposed to the liquid within the compartment and oriented in substantially the same direction as the transmitter.

In operation the transducer is excited so as to flex the opposed surfaces simultaneously in a conforming manner in order to generate an asymmetric acoustic signal. This signal comprises a positive pressure wave in one direction and a simultaneous negative pressure wave in the opposite direction. The signal is transmitted through the borehole liquid to the adjoining formation and then detected at a location spaced longitudinally along the well from the transmitter.

Further features of the invention are described below with reference to a preferred embodiment of the tool shown in the accompanying drawings, in which:

Figure 1 is a schematic illustration of an acoustic logging system embodying the present invention.

Figure 2 is an illustration partly in section showing details of a portion of the tool shown in Figure 1.

Figure 3 is a sectional view taken along line 3—3 of Figure 2.

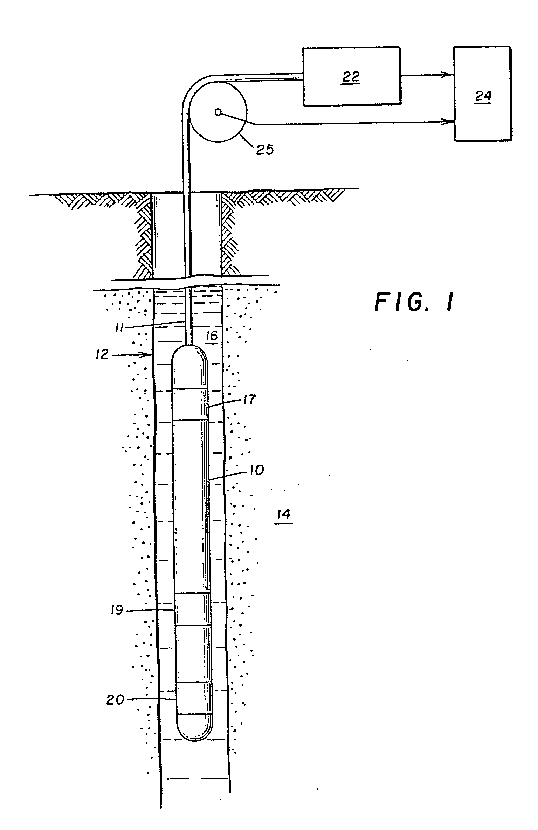

Referring to Figure 1, the logging system includes an elongated logging tool 10 which is suspended from a cable 11 within a borehole 12 which traverses a subterranean formation of interest indicated by reference character 14. The well 12 is filled with a liquid such as drilling mud indicated by reference numeral 16. The logging tool 10 comprises an acoustic transmitter 17 and acoustic receivers 19 and 20. Transmitter 17 and preferably also receivers 19 and 20 take the form of bender-type transducers are described in greater detail below.

Signals from the logging tool 10 are transmitted uphole by the conductors in cable 11 to any suitable utilization system at the surface, for example, an uphole analysis and control circuit 22 and recorder 24. A depth indicator such as a measuring sheave produces a depth signal which is applied to the recorder 24 in order that the output from circuit 22 may be correlated with depth.

The logging system may be operated in a manner to measure one or more parameters ascertainable with acoustic well logging systems. For example, the system may be operated in a velocity and/or amplitude logging mode as described previously. The transmitter and receivers are controlled through suitable timing circuitry located either uphole, or in the logging tool itself. Typically, the control circuitry will comprise a time base generator which operates to produce pulses to excite transmitter 17 and which gate receivers 19 and 20. For example, the time base generator may generate a train of triggering pulses which produce a pulse repetition rate from the transmitter 17 of 15 acoustic pulses per second. Receivers 19 and 20 may be gated alternately in order to prevent cross feed within the cable 11 as will be readily recognized by those skilled in the arts. For example, receiver 19 may be gated on during an interval of from 0.5 to 30 milliseconds subsequent to a first acoustic pulse from transmitter 17. Receiver 19 is then gated off and after the next succeeding pulse from transmitter 17, receiver 20 gated on. For example, receiver 20 may be gated on during a similar interval from 0.5 to 30 milliseconds subsequent to the transmitter output pulse. The logging tool may be moved through the well of any suitable rate while it is operated to generate and receive the acoustic pulses. Typically the tool will be lowered to the bottom of the interval to be logged and then pulled upwardly during the logging measurements at a speed of at least 6 metres per minute, although somewhat greater logging speeds, e.g. 20 metres per minute, can normally be used.

At the surface, the uphole circuitry operates on the signals from receivers 19 and 20 to produce signals representative of the travel time between receivers 19 and 20 and the difference in amplitude between the acoustic signals detected by receivers 19 and 20. The circuitry employed for determining the time interval between the acoustic signal arrival at receivers at 19 and 20 may be of any suitable type. For example, the pulses employed to trigger the transmitter may also be applied to a ramp function generator to initiate a signal which increases monotonically with time. For example the ramp function generator may respond to a triggering pulse to generate a voltage which increases linearly with time. Thus, the amplitude of the voltage is directly proportional to the time following generation of the acoustic signal by transmitter 17. The output from the ramp function generator is applied through gates controlled by the outputs from receivers 19 and 20 to respective voltage storage means. Thus, when an acoustic signal is received at receiver 19, the resulting transducer voltage is applied to open one gate to pass the voltage from the ramp function generator to a first storage means. When the next signal is received by receiver 20, the transducer signal is applied to open another gate to pass the output from the ramp function generator to a second storage means. The two voltage signals are then applied to a difference circuit, the output of which is recorded in correlation with depth to provide a travel time log. The amplitude parameter may similarly be determined through the use of any suitable circuitry. For example, the peak voltage outputs from receivers 19 and 20 may be applied to a difference circuit which produces a voltage which is representative of the difference in the maximum amplitudes of the acoustic signals received by receivers 19 and 20. The output from this difference circuit is then recorded to provide a log of attenuation within the formation. Such analysis and control circuitry is well known to those skilled in the art and for a further description thereof reference is made to U.S. Patent No. 3,191,145. Also, while two receivers are shown it will also be recognized that the logging tool may be equipped with only one receiver in which case a measured parameter may be the travel time between transmitter 17 and the receiver. Preferably however, two receivers as shown will be employed in order to avoid distortion of the measured values due to borehole effects such as changes in the borehole diameter. Typically, the first receiver 19 is spaced between 1.6—4.6 cm (5 to 15 feet) from the transmitter with a spacing between adjacent receivers 19 and 20 being between 0.7—1.6 m (2 to 5 feet).

The shear wave acoustic pulses are produced in accordance with the present invention by means of a bender-type transducer. Bender-type transducers are in themselves well known and take the form of an element which responds to an applied electrical field such that its opposed surfaces bend in the sam direction in a conforming manner. Thus, the transducer acts as a point source for an acoustic shear wave signal which may be characterized as comprising a positive pressure wave generated in one direction from one surface and a simultaneous negative pressure wave generated in the opposite direction from the other surface. For example, as described by Sheridan, C.A., et al, "Bender Bar Transducers for Low-Frequency Underwater Sound Sources", presented at the 97th Meeting of the Acoustical Society of America, Cambridge, Massachusetts, June 15, 1979, Honeywell Defense Electronics Division, Seattle, Washington, August 20, 1979, a suitable bender-type transducer may take the form of piezoelectric elements bonded together in a manner such that one side of the transducer is driven in extension while the other side is driven in contraction or is not driven. The result is that both sides of the transducer then bend in a conforming manner in response to an applied voltage. A suitable bender-type transducer for use in the present invention is available from Astro Engineering Inc., Orlando, Florida, and is comprised of two piezoelectric discs which are bonded together and encased in a plastic "potting" compound. The two ceramic discs are reversed in polarity such that one element responds to an applied voltage to expand while the other contracts. The result is that the element flexes in response to each voltage pulse such that one surface is concave and the other is convex. The frequency of the acoustic signal produced by this transducer ranges from about 1 to 6 KHz with a predominant frequency of about 3 KHz.

In the present invention, the transducer is mounted such that the opposed flexing surfaces are unrestricted and both are acoustically coupled to the liquid within the well-bore.

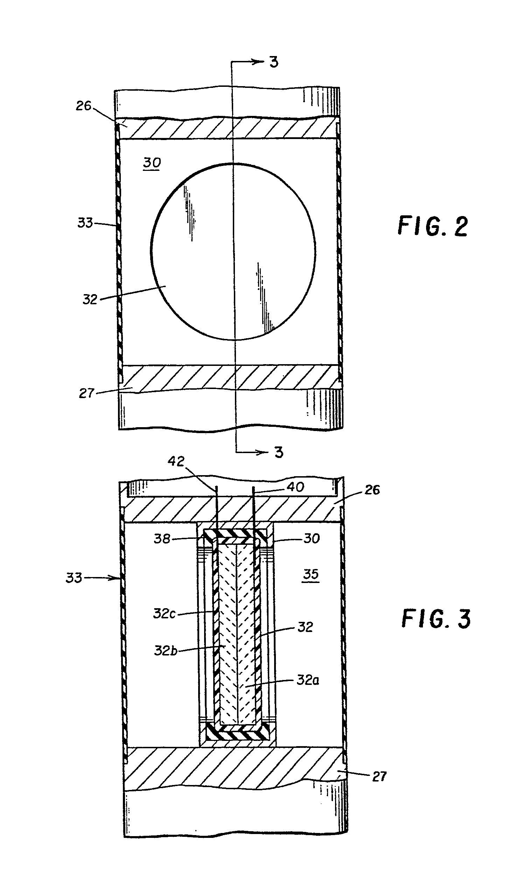

Figures 2 and 3 illustrate an enlarged view of the transmitter assembly 17 showing in detail the bender-type transducer and the manner in which it is supported within the logging tool. As shown in Figure 2, upper and lower panels 26 and 27, respectively, define a transducer compartment within the logging tool. Extending between the panels 26 and 27 is a transducer mounting bracket 30 which has an aperture in it which receives the bender-type transducer 32. The transducer compartment is provided with a peripheral window 33 which is relatively transparent to acoustic energy. The window 33 may be formed of any suitable material which has an acoustic impendance close to that of the well liquid in order to minimize reflections from the window. The transducer compartment is filled with a suitable coupling liquid as indicated by reference numeral 35 in Figure 3 which also has an acoustic impendance close to that of the liquid within the wellbore. For example, the window 33 may be formed of neoprene rubber and the coupling liquid 35 within the compartment may be a light motor oil.

The mounting of the bender-type transducer 32 is shown in greater detail in Figure 3. As shown in Figure 3, the transducer 32 comprises piezoelectric elements 32a and 32b which are bonded together and encased in a plastic potting compound 32c. The transducer 32 is mounted in support 30 by means of a rubber mounting ring 38 in order to reduce the transmission of acoustic energy directly from the transducer to the structural components of the well logging tool. Electrical leads 40 and 42 are bonded to the outer surfaces of elements 32a and 32b, respectively. Leads 40 and 42 extend through panel 26 to a suitable source for a voltage pulse such as a capacitor and inductor circuit which is periodically charged and then discharged in response to a suitable triggering pulse as described above.

The bender-type transducer acts as a single point acoustic source and ideally produces a shear wave displacement and radiation pattern of the type disclosed in the article by Kitsunezaki. The shear wave amplitude is at a maximum in a plan of the operating faces of the bender-type transducer and falls off as a cosine function until it reaches a minimum after displacement through an angle of 90°. The compressional wave pattern is 90° out of phase with respect to the shear wave. Thus the compressional wave amplitude is at its maximum along an axis normal to the operating surfaces of the bender-tyep transducer.

The receiving transducer or transducers may, in accordance with the broadest aspect of the invention, be of any suitable type. For example, they may take the form of a suspension-type geophone detector of the type disclosed in the paper by Kitsunezaki. It is preferred, however, to employ a bender-type transducer for the reception of the acoustic signal and to orient the receiving transducer such that its opposed operating surfaces are oriented in substantially the same direction as the transmitting transducer. Stated otherwise, the operating surfaces of the transmitting and receiving transducers are located in substantially parallel planes. Since the displacement pattern of the shear wave is a cosine function, some deviation from this standard can be tolerated and still provide a signal response well over 90% of the maximum shear wave amplitude. Where two receiving transducers are employed, both of the receivers should be oriented in the same direction, particularly where the system is operated in an amplitude logging mode, i.e. where attenuation of the signal between the receivers is arrived at by comparing the amplitudes of the signals received at the receivers.

## Claims

1. A shear wave acoustic well logging tool for insertion into a borehole comprising an acoustic transmitter (17) which is mounted in a compartment in the tool containing a coupling liquid (35) and which is connected to means (22) for exciting the transmitter, and an acoustic receiver (19, 20) mounted in the tool and spaced longitudinally from the transmitter (17), characterized in that the acoustic transmitter (17) comprises a bender-type transducer (32) having opposed unrestricted planar surfaces exposed to the coupling liquid (35) said surfaces being oriented parallel to the longitudinal axis of the tool and being aligned with opposed unrestricted openings in the compartment, and the surfaces being capable of being simultaneously flexed in a conforming manner to generate a positive pressure wave in one direction while simultaneously generating a negative pressure wave in the opposite direction.

2. A tool as claimed in claim 1 characterized in that the receiver (19, 20) comprises a bender-type transducer having opposed unrestricted planar surfaces oriented in substantially the same direction as those of the transmitter.

**Patentansprüche**

1. In ein Bohrloch einbringbares, mit akustischen Schubwellen arbeitendes Untersuchungsgerät, mit einem akustischen Sender (17), der in einer mit einer Kopplungsflüssigkeit (35) gefüllten Kammer des Geräts montiert und an eine zum Anregen des Senders vorgesehene Einrichtung (22) angeschlossen ist, und mit einem akustischen Empfänger (19, 20), der in dem Gerät montiert ist und in Längsrichtung mit Abstand von dem Sender (17) angeordnet ist, dadurch gekennzeichnet, daß der akustische Sender (17) einen Biege-Wandler (32) aufweist, der einander gegenüberliegende, der Kopplungsflüssigkeit (35) ausgesetzte, freie ebene Außenflächen besitzt, die parallel zu der Längsachse des Geräts orientiert und mit einander gegenüberliegenden freien Öffnungen der Kammer ausgerichtet sind, und daß die Außenflächen imstande sind, gleichzeitig konform durchgebogen zu werden, um in der einen Richtung eine Überdruckwelle und gleichzeitig in der entgegengesetzten Richtung eine Unterdruckwelle zu erzeugen.

2. Gerät nach Anspruch 1, dadurch gekennzeichnet, daß der Empfänger (19, 20) einen Biege-Wandler aufweist, der einander gegenüberliegende, freie ebene Außenflächen besitzt, welche im wesentlichen in der gleichen Richtung orientiert sind, wie diejenigen des Senders.

**Revendications**

1. Outil de sondage de puits, à ondes acoustiques transversales, destiné à être introduit dans un forage, comprenant un émetteur acoustique (17) qui est monté dans un compartiment de l'outil comprenant un liquide de couplage (35) et qui est connecté à un dispositif (22) pour exciter l'émetteur et un récepteur acoustique (19, 20) monté dans l'outil et espacé de l'émetteur (17) dans la direction longitudinale, caractérisé en ce que l'émetteur acoustique (17) consiste en un transducteur (32) de type à flexion comprenant des surfaces planes opposées non restreintes exposées au liquide de couplage (35), lesdites surfaces étant orientées parallèlement à l'axe longitudinal de l'outil et étant alignées avec des ouvertures opposées non restreintes dans le compartiment, et les surfaces étant susceptibles de fléchir simultanément, en conformité, pour produire une onde de pression positive dans une direction tout en produisant simultanément une onde de pression négative dans la direction opposée.

2. Outil selon la revendication 1, caractérisé en ce que le récepteur (19, 20) consiste en un transducteur du type à flexion ayant des surfaces planes opposées non restreintes orientées pratiquement dans la même direction que celles de l'émetteur.

0 031 989

FIG. 1

FIG. 2

FIG. 3